# EUROPÄISCHE PATENTSCHRIFT

(11) **EP 1 429 023 B1**
(45) Veröffentlichungstag und Bekanntmachung des Hinweises auf die Patenterteilung: **28.09.2016**
(21) Anmeldenummer: 03028095.2
(22) Anmeldetag: 09.12.2003
(51) Int. Cl.: F03D 1/00

(54) **Tiefgründungselement mit stabilisierungskragen aus Beton oder verfestigtem Boden für off-shore-Bauwerke**
Foundation for offshore constructions
Fondation pour constructions marines

(30) Priorität: 11.12.2002 DE 10257726; 22.01.2003 DE 10302295; 16.05.2003 DE 10322210
(43) Veröffentlichungstag der Anmeldung: 16.06.2004
(73) Patentinhaber: STRABAG Offshore Wind GmbH, 70567 Stuttgart (DE)
(72) Erfinder: von Lübtow, Boris, 70569 Stuttgart (DE); Voigt, Thomas, Dr., 70794 Filderstadt (DE); Weber, Klaus, Dr., 72366 Balingen (DE)
(74) Vertreter: Wasmuth, Rolf

(56) Entgegenhaltungen:
- DE-A1- 10 117 113
- US-A- 4 696 601

## Beschreibung

### Technisches Gebiet

Die Erfindung betrifft die Konstruktion, speziell die Gründung, von Windkraftanlagen, von kombinierten Anlagen zur Gewinnung von Energie aus Wind und Meeresströmungen oder/und Wellen, oder von anderen Bauwerken im offshore Bereich.

### Stand der Technik

In der DE 10117113 A1 ist in einer umfassenden Darstellung zum Stand der Technik der Gründung von off-shore-Bauwerken für unzureichend tragfähige Böden die Möglichkeit eines pfahlgetragenen Fundaments genannt (Pfahl-Platte-Gründungen). Auf diesem Fundament wird dann die Windkraftanlage errichtet. Eine gleichartige Konstruktion ist auch in der EP 1174336 A1 als herkömmliche Fundämentierung für eine ortsfeste Positionierung allgemeiner Funktionseinheiten auf dem oder im Wasser erwähnt.

In der DE 10117113 A1 sind als andere Möglichkeit der Gründung auch Schwerkraftfundamente genannt, die eine Windkraftanlage vorwiegend durch ihr Gewicht am Umkippen hindern. Diese Schwerkraftgründungen werden abgegrenzt von den sogenannten Monopfählen, bei denen die Verlängerung des rohrförmigen Mastes einer Windkraftanlage tief in den Boden eingebracht ist. Ein weiteres Beispiel ist aus US 4,696,601 bekannt.

### Aufgabe der Erfindung

Aufgabe der Erfindung ist eine andere Art Gründung für einen Monopfahl oder eine Gruppe von Einzelpfählen, die es erlaubt, auch in wenig tragfähigen Böden den im Boden verlaufenden Teil des Gründungselementes des Monopfahls oder der Pfahlgruppe kürzer zu halten und die Verformungen zu reduzieren.

### Darstellung der Erfindung

Die Aufgabe wird durch die im Kennzeichen des Anspruchs 1 angegebenen Merkmale gelöst.

Kennzeichnend hierfür ist ein das Gründungselement (1, Monopfahl oder Gruppe von Einzelpfählen) umgebender Kragen (2), der bevorzugt Verbindung zum Gründungselement (1) hat. Der Kragen (2) liegt entweder auf dem Meeresboden (4) auf oder ist in seiner Oberfläche eingebettet.

Der Kragen (2) muß nicht die Form einer Kreisringfläche aufweisen, sondern kann z. B. auch eine gleichförmige oder ungleichförmige drei- oder mehreckige Gestalt annehmen. Eine ungleichförmige Gestalt des Kragens (2) ist vor allem bei dauerhaft ungleichmäßig auf das Gründungselement einwirkenden Kräften von Vorteil. In vielen Fällen wird es sich dabei um eine Vergrößerung des Kragens (2) in Richtung der vorherrschenden Windrichtung handeln.

Der Kragen (2) weist an seiner Stelle größten Durchmessers einen Wert von mindestens dem Doppelten des Durchmessers des Gründungselementes (1) an dieser Stelle auf. Bevorzugt ist ein Wert von etwa dem drei bis fünffachen des Durchmessers des Gründungselementes (1) an dieser Stelle oder mehr. Der Kragen (2) kann auch die Form eines Speichenrades aufweisen, dessen Achse das Gründungselement (1) bildet.

Die durchschnittliche Dicke des Kragens (2) beträgt ungefähr zwischen einem Fünftel und dem fünffachen des Durchmessers des Gründungselementes (1) oder der Gründungspfählgruppe an der entsprechenden Stelle. Bevorzugt sind für Kragen (2) von großem Durchmesser (besonders im Falle von rückverankerten Krägen) Werte von etwa der Hälfte des Durchmessers des Gründungselementes (1) oder der Gründungspfahlgruppe an der entsprechenden Stelle. Besonders bevorzugt ist es, wenn die Dicke des Kragens (2) sich zum Gründungselement (1) hin verstärkt und dieses somit fester einschließt und gegen Kippbewegungen stabilisiert.

Eine Verdickung des äußeren Randes des Kragens (2) bringt ebenfalls Vorteile, denn das höhere Gewicht am längeren Hebelarm wirkt ebenfalls einem Kippen entgegen.

Als Material des Kragens (2) bietet sich Beton an. Dieser kann entweder als Fertigteil in Position gebracht werden, wobei es bevorzugt ist, den Kragen (2) vor Ort aus mehreren Teilen aufzubauen.

Oder der Beton wird als Ortbeton ausgebracht, z. B. als Unterwasserbeton, der in entsprechende (bevorzugt verlorene) Schalungen eingefüllt wird. Verlorene Schalungen können hier auch Schalungskissen in Form von "Steppdekken" aus Geotextilien oder Folien sein, die unter Wasser mit hydraulisch erhärtenden Stoffen gefüllt werden.

Wieder eine andere Möglichkeit besteht darin, den Boden um das Gründungselement (1) herum in der gewünschten Kragenform durch Injektionen (mittels Düsenstrahl oder Niederdruck) oder Bodenverbesserungen zu verbessern. Bodenverbesserungen können durch Einbringen und Mischen von hydraulisch erhärtenden Stoffen wie z. B. Zement, Kalk oder Mischungen mit mehrkomponentigen aushärtenden Kunststoffprodukten hergestellt werden. Vor allem bei Krägen (2) geringerer Dicke und geringeren Durchmessers empfiehlt es sich in wenig tragfähigen Böden, den Kragen (2) rückzuverankem. Diese Rückverankerung geschieht bevorzugt von äußeren Bereichen des Kragens (2) aus geneigt nach unten, bevorzugt mit Neigungen zwischen 30 Grad und 90 Grad gegen die Horizontale. Als Rückverankerung (3) dienen zum Beispiel Zuganker, Ramm-, Bohr-, Rüttelverpreß- oder Düsenstrahlpfähle.

Vor allem für Kragen (2) relativ geringen Durchmessers, die nicht rückverankert sind, ist es von Vorteil, dieselben sehr dick, also wie einen den Pfahl bis in größere Tiefe umhüllenden Mantel, auszubilden. Größenordnungsmäßig ist dann der Mantel so dick wie breit.

Diese Ausführung läßt sich am preisgünstigsten mittels Düsenstrahlverfahren hervorbringen. Hierzu werden neben dem in den Boden eingebrachten Monopfahl (1) Bohrungen mit Bodenvermörtelung niedergebracht, die mit dem Monopfahl (1) in Verbindung stehen. Neben diesen erzeugten Düsenstrahlkörpern (6) können in einem weiteren Ring und in Kontakt (Übersehneidung) zusätzlich weitere (6) erzeugt werden.

In einer bevorzugten, weil materialsparenden Version wird der Mantel aus miteinander in Kontakt stehenden Düsenstrahlkörpern (6) hergestellt, wobei zwischen den Düsenstrahlkörpern (6) auch noch unvermörtelte Bodenbereiche (7) stehengelassen wurden. Man erhält so eine Art sich gegenseitig versteifendes Fachwerk, oder auch eine Art "Bienenwabe". Entscheidend für die Stabilität der Windkraftanlage ist dann vor allem die Oberfläche dieses zusammengesetzten Gebildes mit seinen Einschlüssen aus unvermörteltem Boden (7).

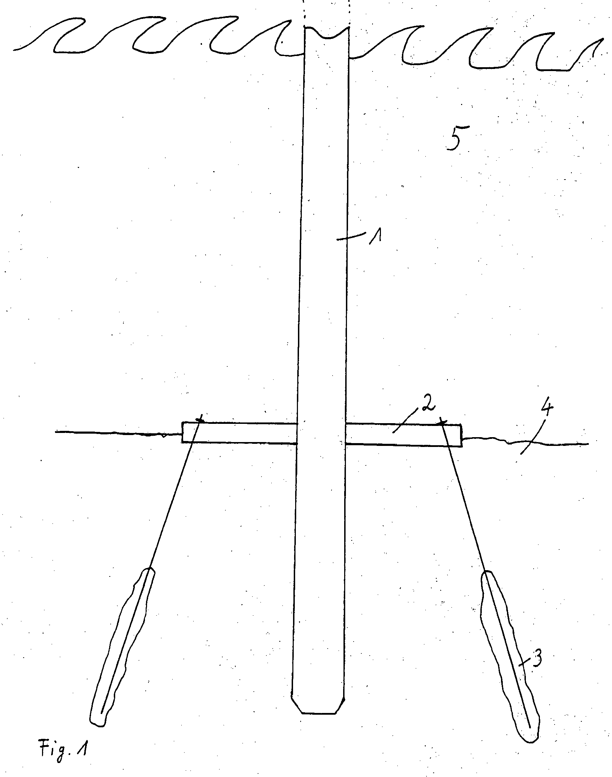

Die Fig.1 (Querschnitt) zeigt das Prinzip der Erfindung am Beispiel eines Monopfahls (1), der mit einem rückverankerten (3) dünnen Kragen (2) versehen ist.

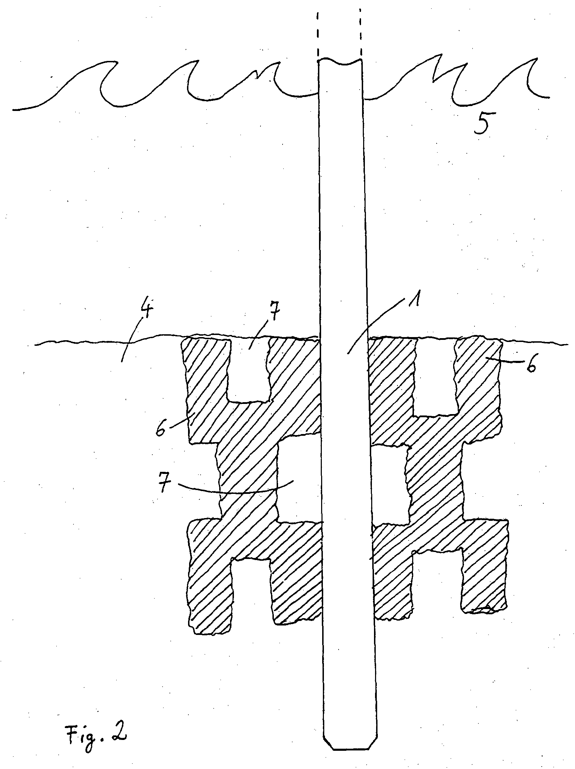

Fig.2 zeigt im Schnitt einen Monopfahl (1), der erfindungsgemäß durch einen dicken Kragen (2, 6) in Fachwerkstruktur gegen ein Kippen stabilisiert ist.

### Bezugszeichenliste

- 1: Tiefgründungselement (hier unteres Ende eines Monopfahls)
- 2: Kragen
- 3: Anker
- 4: Meeresboden
- 5: Wasser
- 6: Düsenstrahlkörper
- 7: unvermörtelter Boden

## Patentansprüche

1. Gründungselement (1) eines off-shore Bauwerkes, insbesondere einer off-shore-Windkraftanlage oder einer kombinatorischen Anlage zur Gewinnung von Energie aus Wind und Meeresströmurigen oder/und Wellen,
**dadurch gekennzeichnet, dass** das Gründungselement (1) kombinatorisch aus dem im Boden befindlichen Teil des Gründungselementes (1) in Form einer Pfahlgründung und einem die Pfahlgründung umgebenden Kragen/Mantel (2, 6) aus einem Beton oder vermörteltem Beton besteht.

2. Gründungselement (1) nach Anspruch 1, **dadurch gekennzeichnet, daß** zwischen dem Kragen/Mantel (2, 6) und dem Gründungselement (1) eine feste Verbindung besteht, die auf chemischer Verbindung oder/und grober mechanischer Verbindung oder/und Reibungsschluß beruht.

3. Gründungselement (1) nach mindestens einem der Ansprüche 1 und 2, **dadurch gekennzeichnet, daß** der Kragen/Mantel (2, 6) einen maximalen Durchmesser aufweist, der ungefähr dem Doppelten bis Zehnfachen des Durchmessers des Gründungselementes (1) entspricht und eine Dicke, die ungefähr ein Fünftel bis das Doppelte des Durchmessers des Gründungselementes (1) beträgt.

4. Gründungselement (1) nach mindestens einem der Ansprüche 1 und 2, **dadurch gekennzeichnet, daß** der Kragen/Mantel (2, 6) einen maximalen Durchmesser aufweist, der ungefähr dem Doppelten bis Fünffachen des Durchmessers des Gründungselementes (1) entspricht und eine Dicke, die ungefähr das Doppelte bis Fünffache des Durchmessers des Gründungselementes (1) beträgt.

5. Gründungselement (1) nach mindestens einem der Ansprüche 1 bis 3, **dadurch gekennzeichnet, daß** der Kragen/Mantel (2, 6) im Boden rückverankert (3) ist.

6. Gründungselement (1) nach Anspruch 5, **dadurch gekennzeichnet, daß** die Rückverankerung (3) aus Zugankern, Bohr-, Rüttelverpreß-, Rammpfählen und/oder Düsenstrahipfählen besteht.

7. Gründungselement (1) nach mindestens einem der Ansprüche 1 bis 6, **dadurch gekennzeichnet, daß** der Kragen (2, 6) unsymmetrisch zur Achse des Gründungselements ist.

8. Gründungselement (1) nach mindestens einem der Ansprüche 4 bis 7, **dadurch gekennzeichnet, daß** der Kragen/Mantel (2,6) fachwerkartig aus kleineren, miteinander in Verbindung stehenden Düsenstrahl- oder Bodenverfestigungskörpern (6) zusammengesetzt ist, wobei in den Zwischenräumen des Fachwerks noch unverfestigter Boden (7) als Füllung verbleibt.

## Claims

1. Foundation element (1) of an offshore construction, in particular an offshore wind power plant or a combined plant for acquiring energy from wind and sea currents and/or waves,
**characterised in that** the foundation element (1) is a combination of the part of the foundation element (1) which is located in the ground in the form of a pile foundation and a collar/cladding (2, 6) surrounding the pile foundation and made of a concrete or grouted concrete.

2. Foundation element (1) according to claim 1,
**characterised in that** there is a permanent joint based on a chemical bond and/or a mechanical linkage and/or a frictional connection between the collar/cladding (2, 6) and the foundation element (1).

3. Foundation element (1) according to at least one of claims 1 and 2, **characterised in that** the collar/cladding (2, 6) has a maximum diameter which approximately corresponds to twice to ten times the diameter of the foundation element (1) and a thickness which is approximately one fifth of to twice the diameter of the foundation element (1).

4. Foundation element (1) according to at least one of claims 1 and 2, **characterised in that** the collar/cladding (2, 6) has a maximum diameter which approximately corresponds to twice to five times the diameter of the foundation element (1) and a thickness which is approximately twice to five times the diameter of the foundation element (1).

5. Foundation element (1) according to at least one of claims 1 to 3, **characterised in that** the collar/cladding (2, 6) is back-anchored in the ground.

6. Foundation element (1) according to claim 5,
**characterised in that** the back anchoring consists of tie rods, bored piles, vibratory rammed piles, driven piles and/or jet piles.

7. Foundation element (1) according to at least one of claims 1 to 6, **characterised in that** the collar (2, 6) is asymmetric relative to the axis of the foundation element.

8. Foundation element (1) according to at least one of claims 4 to 7, **characterised in that** the collar/cladding (2, 6) is composed in the manner of a truss of smaller joined-together jet or soil consolidation bodies (6), not yet consolidated soil (7) remaining in the interstices of the truss as a filling.

## Revendications

1. Elément de fondation (1) d'une construction offshore, en particulier d'une éolienne offshore ou d'une installation combinée destinée à produire de l'énergie à partir du vent et des courants marins et/ou des vagues, **caractérisé en ce que** l'élément de fondation (1) se compose d'une combinaison de la partie de l'élément de fondation (1) située dans le fond, sous la forme d'une fondation sur pilotis, et d'une embase/surface latérale (2, 6), composée d'un béton ou d'un béton additionné de ciment, qui entoure ladite fondation sur pilotis.

2. Elément de fondation (1) selon la revendication 1,
**caractérisé en ce qu'**il y a entre l'embase/enveloppe (2, 6) et l'élément de fondation (1) une liaison fixe qui est basée sur une liaison chimique ou/et sur une liaison mécanique grossière ou/et sur une adhérence par friction.

3. Elément de fondation (1) selon l'une au moins des revendications 1 et 2, **caractérisé en ce que** l'embase/enveloppe (2, 6) présente un diamètre maximal qui correspond à peu près à deux à dix fois le diamètre de l'élément de fondation (1), et une épaisseur qui va à peu près d'un cinquième au double du diamètre de l'élément de fondation (1).

4. Elément de fondation (1) selon l'une au moins des revendications 1 et 2, **caractérisé en ce que** l'embase/enveloppe (2, 6) présente un diamètre maximal qui correspond à peu près à deux à cinq fois le diamètre de l'élément de fondation (1), et une épaisseur qui représente à peu près deux à cinq fois le diamètre de l'élément de fondation (1).

5. Elément de fondation (1) selon l'une au moins des revendications 1 à 3, **caractérisé en ce que** l'embase/enveloppe (2, 6) est ancrée (2) dans le fond.

6. Elément de fondation (1) selon la revendication 5,
**caractérisé en ce que** l'ancrage (3) se compose de tirants, de pieux forés, de pieux injectés par vibrations, de pieux battus et/ou de pieux à jet.

7. Elément de fondation (1) selon l'une au moins des revendications 1 à 6, **caractérisé en ce que** l'embase (2, 6) est asymétrique par rapport à l'axe de l'élément de fondation.

8. Elément de fondation (1) selon l'une au moins des revendications 4 à 7, **caractérisé en ce que** l'embase/ enveloppe (2, 6) est assemblée à la manière d'un treillis à partir de corps à jet ou de corps de consolidation de fond plus petits qui sont reliés entre eux, étant précisé qu'il reste encore dans les interstices du treillis, comme remplissage, un fond (7) non consolidé.
